# FASCICULE DE BREVET EUROPEEN

(11) **EP 1 955 579 B1**
(45) Date de publication et mention de la délivrance du brevet: **25.11.2009**
(21) Numéro de dépôt: 08100746.0
(22) Date de dépôt: 22.01.2008
(51) Int. Cl.: A01C 17/00

(54) **Machine et procédé d'épandage centrifuge d'engrais ou de produits similaires en grains.**
Maschine und Verfahren zur Zentrifugalverteilung von Dünger oder ähnlichen gekörnten Produkten
Machine and method for centrifugal spreading of manure or similar products in grain form.

(30) Priorité: 09.02.2007 FR 0700948
(43) Date de publication de la demande: 13.08.2008
(73) Titulaire: Sulky Burel, 35220 Chateaubourg (FR)
(72) Inventeur: Leveille, Lionel, 35370, BREAL SOUS VITRE (FR); Clochard, Daniel, 35113, DOMAGNE (FR)
(74) Mandataire: Le Faou, Daniel

(56) Documents cités:
- EP-A- 1 247 437
- EP-A2- 0 988 780
- DE-A1- 19 902 552

## Description

La présente invention concerne une machine et un procédé d'épandage centrifuge d'engrais ou de produits similaires en grains.

Dans la suite de la présente demande, y compris les revendications, on utilisera le terme « produits » et l'expression « produits en grains » pour désigner indifféremment des engrais ou d'autres produits granuleux d'aspect similaire.

On connaît par le brevet EP - 1 336 332, auquel on pourra se reporter au besoin, un dispositif d'épandage centrifuge de produits en grains, qui comprend au moins un disque rotatif d'axe vertical, portant au moins deux pales éjectrices, dites standard, servant à l'épandage normal, et au moins une pale auxiliaire, associée à l'une des pales standard et servant à l'épandage de bordure, qui est plus courte que la pale standard et qui est positionnée devant cette dernière pour intercepter, en vue d'un épandage de bordure, le flux de produits déversés devant elle sur le disque et les projeter vers l'extérieur.

Ce dispositif comprend des moyens de sélection aptes à modifier la zone de chute des produits sur le disque, de sorte que dans un premier état d'épandage la pale principale intercepte lesdits produits, tandis que la pale auxiliaire ne les intercepte pas, et que dans un second état d'épandage de bordure, la pale auxiliaire intercepte les produits, tandis que la pale principale n'intercepte pas de produits.

Le premier état correspond à un épandage « plein champ » avec un spectre de largeur importante.

Le second état correspond à un épandage « de bordure » avec un spectre de largeur limitée sur un côté de la machine (côté bordure de champ), destiné à empêcher que des produits ne soient projetés au-delà des limites de la parcelle sur laquelle on doit épandre les produits en grains.

La bordure peut être, par exemple, une haie, un fossé, une barrière, un chemin, une route, un ruisseau, ou une parcelle adjacente, cultivée ou non.

On comprend que dans certaines situations, il est essentiel qu'aucun - ou pratiquement aucun- grain du produit ne déborde du champ traité. C'est le cas par exemple lorsque la limite est matérialisée par un ruisseau, de façon à éviter tout risque de pollution.

Le second état, correspondant à un épandage « de bordure », permet en principe d'y parvenir. Pour cela la largeur du spectre d'épandage est réduite en conséquence. Cependant, la diminution de densité des grains vers l'extérieur (en direction de la bordure) ne se fait pas brutalement, mais progressivement. Il existe donc une bande relativement large entre la zone de densité normale (correspondant à un épandage plein champ) et la bordure proprement dite (où la densité de grains est nulle), dans laquelle la densité s'affaiblit de l'intérieur vers l'extérieur du champ, et où le rendement est mauvais.

Ceci dissuade certains opérateurs, par exemple des agriculteurs qui épandent de l'engrais, de travailler en mode bordure quitte à laisser une partie des produits s'échapper au-delà de la limite du champ qu'ils traitent.

Dans certains cas ce n'est pas gênant.

Dans d'autre cas, notamment si le champ borde une route ou un ruisseau, ce peut l'être.

L'invention vise à résoudre ce problème en proposant une machine sur laquelle il est prévu, entre les états extrêmes d' « épandage de plein champ » et d' « épandage de bordure » -que l'on appellera « épandage de bordure strict » un état intermédiaire d'épandage, adapté pour limiter la largeur du spectre d'épandage côté bordure, mais de manière moins rigoureuse que pour l'épandage de bordure strict. Ceci signifie que l'on tolère l'échappement hors limite d'une petite quantité de produits, ce qui n'est pas gênant dans certaines situations où il n'y a pas de risque de pollution notamment, avec en contrepartie l'assurance d'un rendement convenable pratiquement jusqu'à la bordure.

La machine d'épandage centrifuge d'engrais ou de produits similaires en grains qui fait l'objet de la présente invention comporte une enceinte de stockage desdits produits, au moins un disque rotatif d'axe vertical pourvu d'au moins une pale éjectrice, ainsi que des moyens de déversement de ces produits depuis l'enceinte de stockage sur le disque, la rotation du disque ayant pour effet de projeter les produits à l'extérieur du disque et de les épandre au sol, cette machine étant en outre équipée d'un organe mobile, dit « orienteur de flux », apte à assurer une modification de trajectoire des produits, et susceptible d'être déplacé sélectivement dans l'une ou l'autre de deux positions distinctes et déterminées au moyen d'un dispositif de commande piloté à distance, de sorte que dans l'une de ces deux positions de l'organe orienteur de flux, dite « d'épandage plein champ », la largeur du spectre d'épandage soit étendue, tandis qu'au contraire, dans son autre position, dite d'«épandage de bordure strict», la largeur du spectre d'épandage soit notablement réduite sur un côté de la machine, machine dans laquelle ledit organe orienteur de flux est adapté pour occuper au moins une troisième position déterminée prédéfinie, dite « intermédiaire », correspondant à une réduction de la largeur du spectre d'épandage moins importante que pour un épandage de bordure strict, et est disposé en amont du disque, de manière à assurer le déversement des produits sur celui-ci, son déplacement permettant de faire varier la zone de chute des produits sur le disque.

L'état de la technique en la matière peut être illustré par le document EP- 1 247437.

Conformément à l'invention, d'une part, le disque rotatif porte au moins une pale éjectrice, dite principale, associée à au moins une pale auxiliaire qui est plus courte que la pale principale et qui est positionnée juste devant cette dernière quand on considère le sens de rotation du disque, et, d'autre part, les trois positions déterminées de l'organe orienteur de flux sont ainsi définies que :
a) en position d'épandage plein champ, la zone de chute des produits sur le disque est située devant la trajectoire de la pale principale, juste en arrière de la trajectoire de la pale auxiliaire, de sorte que les produits ne sont pas interceptés par cette dernière, mais seulement par la pale principale;
b) en position d'épandage de bordure strict, la zone de chute des produits sur le disque est située devant la trajectoire de la pale auxiliaire de sorte que les produits sont interceptés par cette dernière, mais non par la pale principale;
c) en position intermédiaire, la zone de chute des produits sur le disque est située à cheval sur la trajectoire de la pale auxiliaire de sorte que les produits sont interceptés partiellement par cette dernière, et partiellement par la pale principale.

Il a déjà été proposé, par le EP - 1 504 645, de déverser les produits sur le disque soit dans la zone située devant la pale principale, soit dans la zone située devant la pale auxiliaire, soit devant ces deux zones à la fois.

Cependant, outre le fait qu'il est dans ce cas nécessaire de recourir à deux moyens d'alimentation différents, un tel dispositif ne permet pas de résoudre le problème à la base de l'invention.

Selon une caractéristique avantageuse de l'invention ledit dispositif de commande est piloté à distance à partir d'une unité de contrôle électronique commandée par au moins trois boutons poussoirs permettant à l'opérateur de sélectionner facilement l'une des trois positions déterminées d'épandage plein champ, intermédiaire, ou de bordure strict.

Par ailleurs, selon un certain nombre de caractéristiques additionnelles possibles de l'invention :
- l'une au moins des trois positions de l'organe orienteur de flux correspondant à l'épandage plein champ, intermédiaire, et/ou de bordure strict est ajustable, par exemple par paramétrage de l'unité de contrôle électronique ;
- ledit orienteur de flux peut occuper plusieurs positions intermédiaires, permettant de travailler en bordure avec plusieurs spectres d'épandage de largeurs différentes, avec une réduction de largeur moins importante que pour un épandage de bordure strict (et un spectre plus large, par conséquent que pour un épandage de bordure strict, mais moins large que pour un épandage plein champ) ;
- ledit dispositif de commande est piloté à distance à partir d'une unité de contrôle électronique qui est connectée à un dispositif d'affichage permettant à l'opérateur de recevoir certaines informations, telles que notamment la vitesse du disque, le débit d'épandage, la hauteur ou l'inclinaison du disque par rapport au sol, et/ou le mode d'épandage mis en oeuvre : plein champ, intermédiaire, ou de bordure strict ;
- ledit dispositif de commande est un vérin, notamment un vérin électrique pourvu d'un codeur d'impulsions ;
- la machine est destinée à être attelée à un tracteur agricole, et le déplacement de l'organe orienteur de flux peut être piloté à distance à partir de la cabine du tracteur ;
- la machine est équipée d'une paire de disques rotatifs à chacun desquels est associé un organe mobile orienteur de flux, ce qui permet de procéder, sur chaque côté de la machine, à un épandage plein champ, de bordure strict ou intermédiaire.

Dans ce cas, les deux organes orienteurs de flux peuvent être avantageusement pilotés à distance à partir d'une unité de contrôle électronique unique, commune, le cas échéant connectée à un dispositif d'affichage également unique.

D'autres caractéristiques et avantages de l'invention apparaîtront de la description qui va maintenant en être faite, en référence aux dessins annexés, sur lesquels:
La figure 1 est un schéma de principe des moyens de pilotage du dispositif de commande de l'organe orienteur de flux.
Les figures 2 à 7 illustrent un mode de réalisation de l'invention, dans lequel l'organe orienteur de flux est une goulotte disposée en amont (si on considère le sens de déplacement des produits), et au dessus du disque d'épandage.

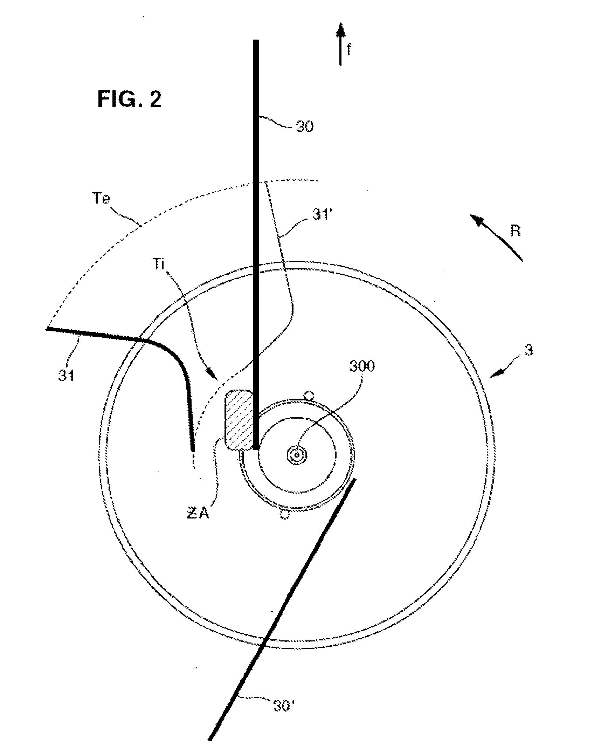

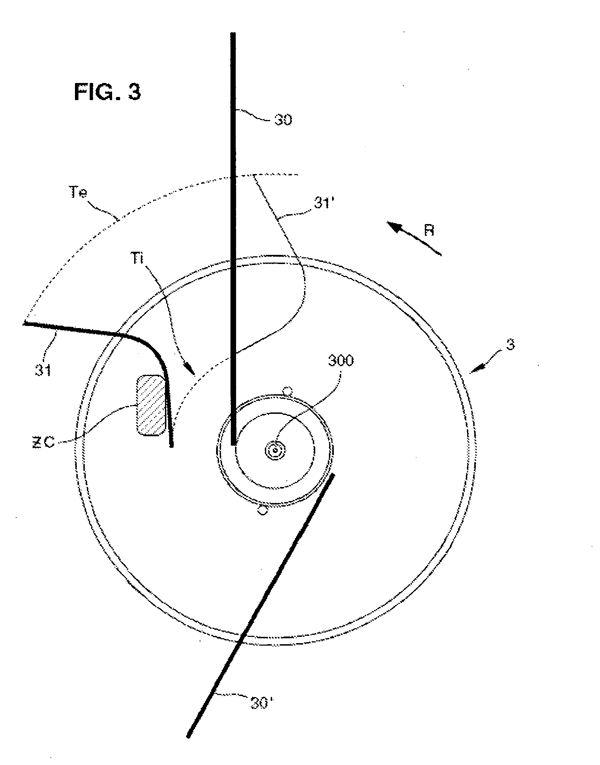

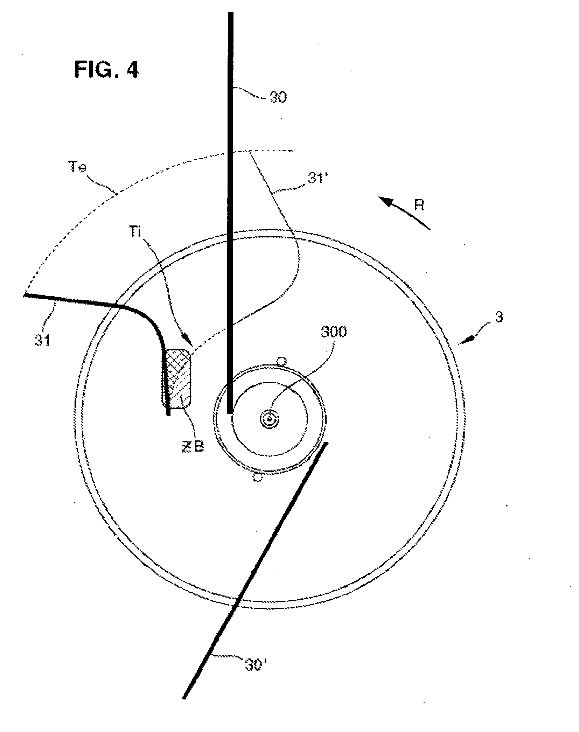

Les figures 2, 3 et 4 sont des vues de dessus schématiques d'un disque d'épandage centrifuge, montrant un déversement des produits en trois zones différentes correspondant respectivement à des épandages plein champ (figure 2), de bordure strict (figure 3), et intermédiaire (figure 4).

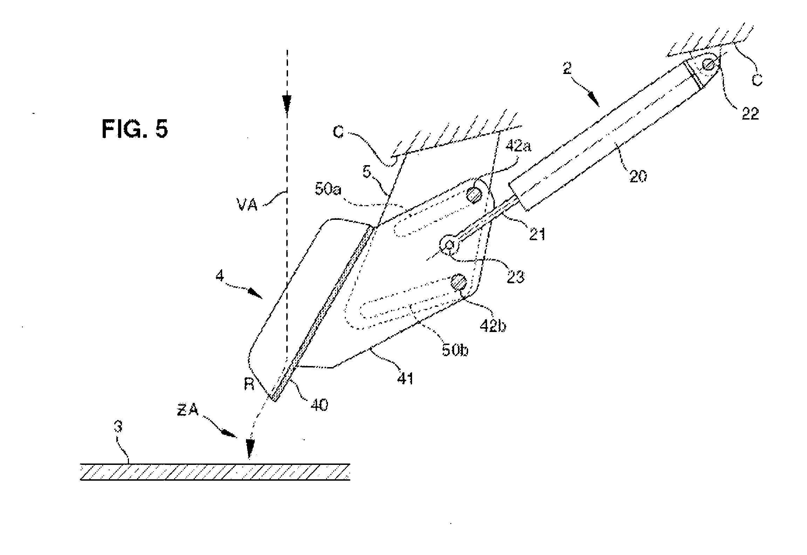

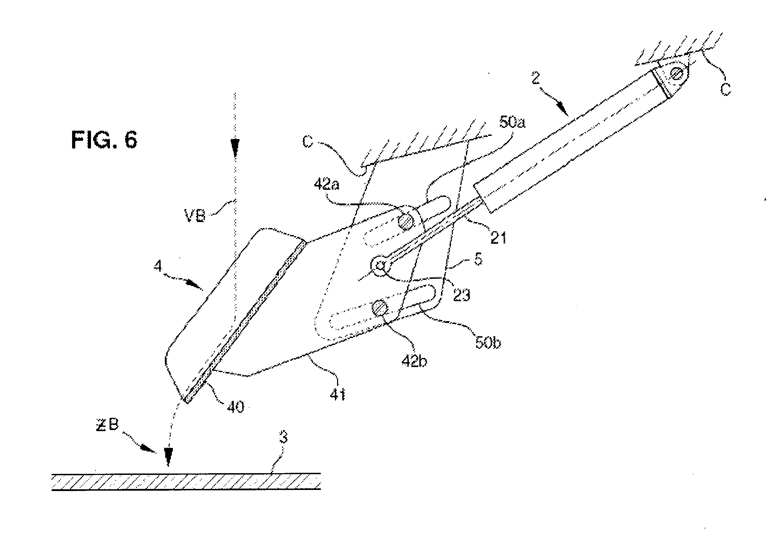

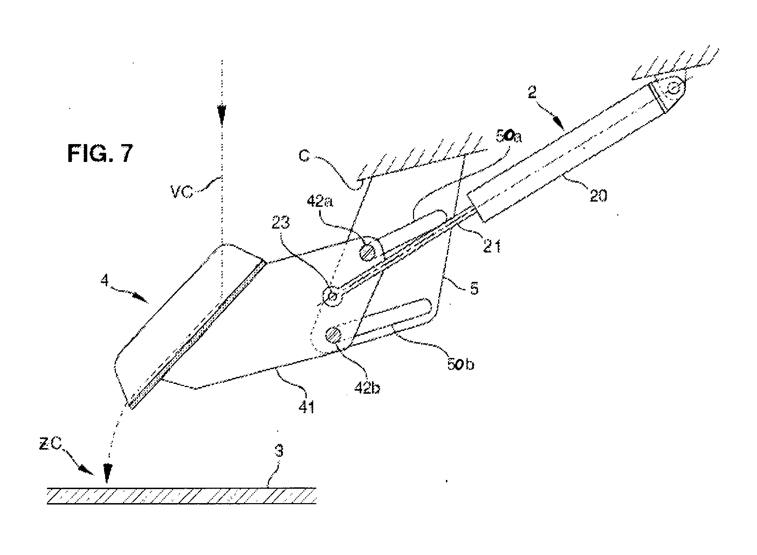

Les figures 5, 6 et 7 sont des vues de côté schématiques de la goulotte mobile assurant le guidage et le déversement des produits issus d'une trémie (non représentée) sur le disque, en trois zones différentes correspondant respectivement à des épandages plein champ (figure 5), intermédiaire (figure 6), et de bordure strict (figure 7).

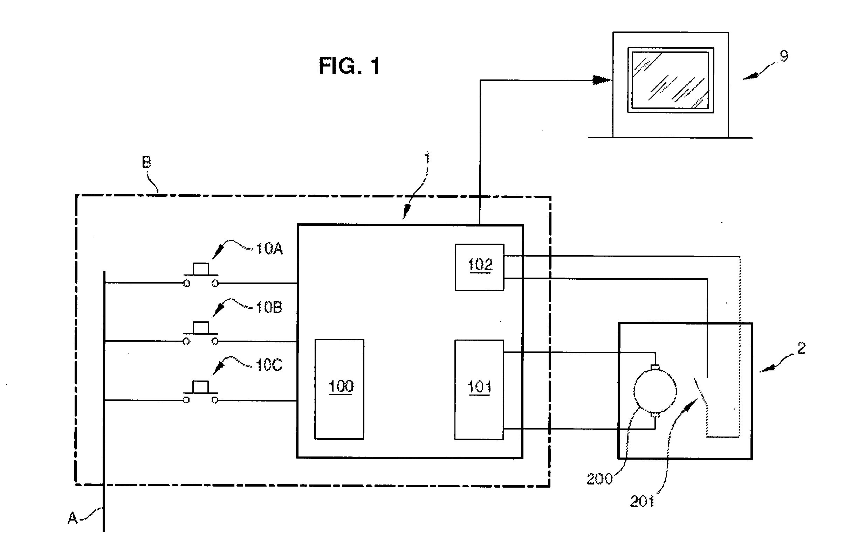

Sur la figure 1, le contour en traits interrompus mixtes **B** représente un boîtier de télécommande, avec ou sans fil, d'un vérin 2 servant à déplacer l'organe orienteur de flux (non représenté).

Celui-ci est une goulotte de guidage et de déversement de produits sur le disque.

Ce boîtier est alimenté en courant électrique par un câble ad hoc **A,** connecté à une batterie, par exemple à la batterie d'un tracteur agricole auquel la machine d'épandage est attelée.

Le câble **A** alimente, via trois interrupteurs à bouton poussoir 10A, 10B et 10C branchés en parallèle, une unité de contrôle électronique (UCE) 1 comprenant un certains nombres de composants appropriés, notamment une mémoire 100, un compteur d'impulsions 102, et une interface de puissance 101.

Le vérin 2 est composé d'un moteur électrique 200 alimenté par l'interface 101 et associé à un codeur 201 connecté au compteur d'impulsions 102.

Ce circuit permet à l'opérateur de piloter le vérin, en appuyant sur l'un des boutons poussoirs, pour que celui déplace l'organe orienteur de flux dans l'une de ses trois positions déterminées, à savoir pour l'épandage plein champ (bouton poussoir 10A), pour l'épandage intermédiaire (bouton poussoir 10B), ou pour l'épandage de bordure strict (bouton poussoir 10C). Avantageusement ces boutons poussoirs ont des couleurs différentes, qui permettent à l'utilisateur de les identifier facilement.

L'UCE 1 est également connectée à un dispositif d'affichage 9, tel qu'un moniteur à écran plat par exemple, présent dans la cabine du tracteur et visible de l'opérateur.

L'affichage du mode d'épandage peut également être réalisé, plus simplement, à l'aide de diodes électroluminescentes, ou « LED », sigle issu de l'expression anglaise « *light- emitting diode* ».

En référence aux figures 2 à 7, de manière classique, le disque d'épandage 3 a la forme générale d'une assiette et porte des pales éjectrices. Il est entraîné en rotation par des moyens d'entraînement appropriés, de type connu, et peut tourner autour d'un axe vertical, ou approximativement vertical, 300 ; son sens de rotation est symbolisé par la flèche R.

Sur la face supérieure du disque sont fixées deux pales éjectrices standard, l'une 30 longue, l'autre 30' plus courte ; leur disposition et leurs dimensions sont adaptées pour un épandage normal, plein champ.

Conformément aux enseignements du document EP - 1 336 332 précité, le disque 3 est muni d'une troisième pale 31, dite auxiliaire, disposée juste devant la pale longue 30, et plus précisément devant la portion amont (ou interne) de cette pale. Cette pale a une forme courbe, de concavité tournée vers l'avant (si on considère le sens de rotation du disque).

La machine comporte un réservoir (non représenté) contenant les produits en grains à épandre, tel qu'une trémie, dont le fond comporte un volet obturateur qui, lorsqu'il est ouvert, permet aux produits de s'écouler, avec un débit réglable. Les produits tombent sur une goulotte distributrice orientable, qui canalisent les grains et les déversent en une zone déterminée du disque.

Cette machine est par exemple un épandeur d'engrais pourvu d'un ou de deux disques d'épandage centrifuge monté(s) à l'arrière, et tracté par un tracteur agricole. Si on considère le sens de déplacement de la machine, symbolisé par la flèche **f** sur la figure 2, la zone de bordure est située sur la droite de cette figure.

Sur les figures 2 à 4, on a représenté par des arcs de cercles en trait interrompu les trajectoires **Ti** et **Te** parcourues par les bords interne et externe de la pale auxiliaire 31 sur un angle de rotation donné, à partir d'une position précédente 31' .

Sur la figure 2, la zone hachurée **ZA** représente la zone de chute des produits pour un épandage plein champ. On voit sur la figure que cette zone est située à l'intérieur du disque 3, par rapport à la trajectoire **Ti,** si bien qu'elle n'est pas balayée par la pale auxiliaire 31 ; seules les pales principales 30 et 30' sont actives, assurant un épandage plein champ, avec un spectre de largeur importante.

Sur la figure 3, la zone hachurée **ZC** représente la zone de chute des produits pour un épandage de bordure strict. On voit sur la figure que cette zone est située juste devant la trajectoire **Ti** de la pale auxiliaire 31 ; conformément aux enseignements du EP 1 336 332, la pale longue 30 située juste derrière la pale auxiliaire 31 n'entre pas en contact avec les produits déversés. Elle ne participe donc pas à l'épandage. Seules la pale auxiliaire 31 et la pale principale courte 30' sont actives, assurant un épandage de bordure, avec un spectre de largeur relativement restreint sur un côté de la machine (côté bordure).

Conformément à l'invention, le dispositif d'épandage est conçu pour que le déversement des produits puisse se faire dans une position intermédiaire, en une zone de chute référencée **ZB** sur la figure 4. Cette zone est « à cheval » sur la trajectoire **Ti,** de sorte qu'une partie des produits est prise en charge par la pale auxiliaire 31 et une autre partie par la pale longue 30, la pale principale courte 30' restant quant à elle également active.

Ce mode de distribution permet d'obtenir un spectre de répartition des produits qui, sur un côté de la machine, est moins étendu que pour un épandage plein champ, mais néanmoins plus étendu que pour l'épandage de bordure « strict » obtenu dans la configuration de la figure 3. Une petite quantité de grains s'échappe au-delà de la bordure du champ, ce qui n'est pas gênant pour certaines conditions de travail. En revanche, la densité de grains, et corrélativement le rendement, demeurent convenables pratiquement jusqu'à ladite bordure.

Les figures 5 à 7 montrent, de façon simplifiée, la structure et le fonctionnement de la goulotte 4 qui permet de modifier la position de la zone de chute des produits sur le disque 3.

La goulotte 4 possède un fond incliné 40 sur lequel tombent sous l'effet de la gravitation les produits délivrés par la trémie. La goulotte les intercepte et les guident afin de les déverser en une zone donnée du disque 3. Selon le degré d'inclinaison de la goulotte, qui fait ici office d'orienteur de flux, cette zone est différente.

Sur les figures 5, 6 et 7, les lignes en trait interrompu **VA, VB** et **VC** représentent la trajectoire d'un grain, lorsque la goulotte 4 est respectivement :
- dans une position d'inclinaison maximale, ou presque maximale, (par rapport à l'horizontale), ce qui correspond à un épandage plein champ ;
- dans une position d'inclinaison moyenne, qui correspond à un épandage intermédiaire ;
- dans une position d'inclinaison minimale, ou presque minimale, qui correspond à un épandage de bordure strict.

Les zones de chute **ZA, ZB** et **ZC** sont donc décalées, comme cela a été expliqué plus haut en référence aux figures 2 à 4.

Cette goulotte 4 est fixée à une armature 41 consistant en une plaquette, ou une paire de plaquettes parallèles, verticale(s) fixée(s) au dos de la paroi de fond 40, et solidaires d'une paire de barrettes horizontales et transversales 42a, 42b.

Une plaquette, ou une paire de plaquettes parallèles, 5 également verticale(s) est (sont) montée(s) fixes sur le châssis C de la machine. Elle(s) est (sont) traversée(s) par une paire de lumières (trous allongés) 50a, 50b rectilignes qui convergent légèrement en direction de la goulotte 4.

Le dimensionnement et le positionnement respectif des barrettes et des lumières est tel que les barrettes 42a, 42b traversent chacune une lumière 50a, respectivement 50b, qui assurent leur guidage. Du fait de la convergence des deux lumières, ce guidage induit un mouvement combiné de translation et de pivotement de la goulotte 4.

Le déplacement de la goulotte est assuré au moyen du vérin 2 dont il a été fait état plus haut, qui est piloté par l'UCE 1.

Le vérin 2 possède un corps 20 articulé sur le châssis C autour d'un axe transversal et horizontal 22. L'extrémité de sa tige 21 est articulée à l'armature 41 autour d'un axe transversal et horizontal 23.

Sur la figure 5, le vérin 20 est rétracté au maximum, et la goulotte 4 inclinée au maximum (par rapport à l'horizontale) ; les barrettes 42 sont positionnées à l'extrémité arrière des lumières de guidage 50.

Les produits sont déversés sur le disque 3 en une zone **ZA** qui correspond à un épandage plein champ.

Sur la figure 7, au contraire, le vérin 20 est en extension maximale, et la goulotte 4 inclinée au minimum (par rapport à l'horizontale) ; les barrettes 42 sont positionnées à l'extrémité avant des lumières de guidage 50.

Les produits sont déversés sur le disque 3 en une zone **ZC** qui correspond à un épandage de bordure strict.

Enfin, sur la figure 6, le vérin 20 est mis partiellement en extension, dans une position bien définie prédéterminée, et la goulotte 4 inclinée selon un angle intermédiaire; les barrettes 42 sont positionnées dans la zone médiane des lumières de guidage 50.

Les produits sont déversés sur le disque 3 en une zone **ZB** qui correspond à un épandage de bordure intermédiaire, permettant d'obtenir un rendement convenable pratiquement jusqu'à la bordure, tout en limitant l'échappement au-delà de cette bordure.

Depuis son poste de conduite, l'opérateur, conducteur du tracteur qui tracte la machine, peut donc très simplement, pratiquement sans risque d'erreur, travailler dans l'une ou l'autre des trois configurations possibles, en fonction de la typologie du terrain et des contraintes liées à l'environnement.

Sur le dispositif d'affichage 9 auquel est connecté l'UCE 1, il est possible d'afficher certaines informations utiles à l'utilisateur, telles que par exemple la vitesse de rotation du (ou des) disque(s), le débit des produits distribués sur le (ou les) disque(s), la hauteur ou l'inclinaison du disque par rapport au sol, et la configuration du travail effectué (plein champ, intermédiaire ou bordure strict).

Pour cela des données fournies par des capteurs appropriés sont fournies à l'UCE et traitées par celle-ci, en vue de l'affichage des informations.

Dans le cas où il existe plusieurs positions intermédiaires possibles, ce qui correspond à une variation continue -et non plus discrète- de la position de l'organe mobile orienteur de flux, la commande de cette position peut être effectuée par l'opérateur au moyen d'un bouton, d'un levier ou d'une touche de commande à action progressive (du genre potentiomètre), dont la position est visualisée par exemple par un repère sur une échelle graduée.

Les notions de position d'épandage plein champ, d'épandage de bordure strict, et d'épandage(s) intermédiaire(s) s'appliquent à l'effet obtenu quant à la configuration du spectre d'épandage, et non à la position de l'organe orienteur de flux qui détermine ces configurations.

En d'autres termes, la position « **B** » de l'organe orienteur de flux n'est pas forcément située entre les positions « **A** » et « **C** » qu'il occupe pour réaliser les épandage « plein champ » et, respectivement, de bordure strict.

Le domaine d'application de l'invention ne se limite pas à l'épandage d'engrais dans les champs, ni même aux activités agricoles.

Comme autre application possible, on peut citer par exemple l'épandage de sable ou de sel sur les chaussées verglacées (ou exposées à un risque de verglas).

## Revendications

1. Machine d'épandage centrifuge d'engrais ou de produits similaires en grains, qui comporte une enceinte de stockage desdits produits, au moins un disque rotatif (3), d'axe vertical (300), pourvu d'au moins une pale éjectrice (30), ainsi que des moyens de déversement de ces produits depuis l'enceinte de stockage sur le disque (3), la rotation du disque ayant pour effet de projeter les produits à l'extérieur du disque et de les épandre au sol, cette machine étant en outre équipée d'un organe mobile (4), dit « orienteur de flux », apte à assurer une modification de trajectoire des produits, et susceptible d'être déplacé sélectivement dans l'une ou l'autre de deux positions distinctes et déterminées au moyen d'un dispositif de commande (2) piloté à distance, de sorte que dans l'une de ces deux positions de l'organe orienteur de flux, dite « d'épandage plein champ », la largeur du spectre d'épandage soit étendue, tandis qu'au contraire, dans son autre position, dite d'«épandage de bordure strict», la largeur du spectre d'épandage soit notablement réduite sur un côté de la machine, machine dans laquelle ledit organe orienteur de flux est adapté pour occuper au moins une troisième position déterminée prédéfinie, dite « intermédiaire », correspondant à une réduction de la largeur du spectre d'épandage moins importante que pour un épandage de bordure strict, et est disposé en amont du disque (3), de manière à assurer le déversement des produits sur celui-ci, son déplacement permettant de faire varier la zone de chute des produits sur le disque (3), **caractérisée par le fait que**, d'une part, le disque rotatif (3) porte au moins une pale éjectrice (30), dite principale, associée à au moins une pale auxiliaire (31), qui est plus courte que la pale principale et qui est positionnée juste devant cette dernière quand on considère le sens de rotation (R) du disque (3), et que, d'autre part, les trois positions déterminées de l'organe orienteur de flux (4) sont ainsi définies que :
a) en position d'épandage plein champ, la zone (ZA) de chute des produits sur le disque (3) est située devant la trajectoire de la pale principale (30), juste en arrière de la trajectoire de la pale auxiliaire (31), de sorte que les produits ne sont pas interceptés par cette dernière, mais seulement par la pale principale (30) ;
b) en position d'épandage de bordure strict, la zone (ZC) de chute des produits sur le disque (3) est située devant la trajectoire de la pale auxiliaire (31) de sorte que les produits sont interceptés par cette dernière, mais non par la pale principale (30) ;
c) en position intermédiaire, la zone (ZB) de chute des produits sur le disque (3) est située à cheval sur la trajectoire de la pale auxiliaire (31) de sorte que les produits sont interceptés partiellement par cette dernière, et partiellement par la pale principale (30).

2. Machine selon la revendication 1, **caractérisée par le fait que** ledit dispositif de commande (2) est piloté à distance à partir d'une unité de contrôle électronique (1) commandée par au moins trois boutons poussoirs (10A, 10B, 10C) permettant à l'opérateur de sélectionner facilement l'une des trois positions déterminées d'épandage : plein champ, intermédiaire, ou de bordure strict.

3. Machine selon la revendication 2, **caractérisée par le fait que** l'une au moins des trois positions de l'organe orienteur de flux (4) correspondant à l'épandage plein champ, intermédiaire, et/ou de bordure strict est ajustable, par exemple par paramétrage de l'unité de contrôle électronique (1).

4. Machine selon l'une quelconque des revendications 1 à 3, **caractérisée par le fait que** ledit orienteur de flux (4) peut occuper plusieurs positions intermédiaires, permettant de travailler en bordure avec plusieurs spectres d'épandage de largeurs différentes, avec une réduction de largeur moins importante que pour un épandage de bordure strict.

5. Machine selon l'une quelconque des revendications 1 à 4, **caractérisée par le fait que** ledit dispositif de commande (2) est piloté à distance à partir d'une unité de contrôle électronique (1) qui est connectée à un dispositif d'affichage permettant à l'opérateur de recevoir certaines informations, telles que notamment la vitesse du disque, le débit d'épandage, la hauteur ou l'inclinaison du disque par rapport au sol, et/ou le mode d'épandage mis en oeuvre : plein champ, intermédiaire, ou de bordure strict.

6. Machine selon l'une quelconque des revendications 1 à 5, **caractérisée par le fait que** ledit dispositif de commande (2) est un vérin, notamment un vérin électrique pourvu d'un codeur d'impulsions.

7. Machine selon l'une quelconque des revendications précédentes, **caractérisé par le fait qu'**elle est destinée à être attelée à un tracteur agricole, et que le déplacement de l'organe orienteur de flux peut être piloté à distance à partir de la cabine du tracteur.

8. Machine d'épandage centrifuge d'engrais ou de produits similaires en grains selon l'une quelconque des revendications précédentes, **caractérisée par le fait qu'**elle est équipée d'une paire de disques rotatifs à chacun desquels est associé un organe mobile (4) orienteur de flux, ce qui permet de procéder, sur chaque côté de la machine, à un épandage plein champ, de bordure strict ou intermédiaire.

## Claims

1. A machine for centrifugal spreading of fertilizers or similar granular products, which includes an enclosure for storing said products, at least one rotary disc (3) with a vertical axis (300), provided with at least one ejector blade (30), as well as means for pouring these products from the storage enclosure on the disc (3), the rotation of the disc having the effect of projecting the products outside the disc and spreading them over the ground, this machine being further equipped with a mobile member (4), a so-called "flow diverter", capable of ensuring a trajectory modification of the products, and capable of being selectively displaced into either one of two distinct positions determined by means of a remote-controlled control device (2), so that in one of these two positions of the flow diverter member, a so-called "full field spreading position", the width of the spreading spectrum is extended, while on the contrary in its other position, a so-called "strict border spreading" position, the width of the spreading spectrum is notably reduced on one side of the machine, a machine in which said flow diverter member is adapted in order to occupy at least a third predefined determined third position, a so-called "intermediate" position, corresponding to a less significant reduction in the width of the spreading spectrum than for strict border spreading, and is positioned upstream from the disc (3) so as to ensure pouring of the products on the latter, its displacement allowing the fall area of the products to be varied on the disc (3), **characterized by** the fact that, on the one hand, the rotary disc (3) bears at least one ejector blade (30), a so-called main blade, associated with at least one auxiliary blade (31), which is shorter than the main blade and which is positioned right in front of the latter when the direction of rotation (R) of the disc (3) is considered, and on the other hand the three determined positions of the flow diverter member (4) are thus defined so that:
a) in the full field spreading position, the fall area (ZA) of the products on the disc (3) is located in front of the trajectory of the main blade (30) just behind the trajectory of the auxiliary blade (31), so that the products are not intercepted by the latter but only by the main blade (30);
b) in the strict border spreading position, the fall area (ZC) of the products on the disc (3) is located in front of the trajectory of the auxiliary blade (31) so that the products are intercepted by the latter but not by the main blade (30);
c) in the intermediate position, the fall area (ZB) of the products on the disc (3) is located astride the trajectory of the auxiliary blade (31) so that the products are partly intercepted by the latter and partly by the main blade (30).

2. The machine according to claim 1, **characterized by** the fact that said control device (2) is remote-controlled from an electronic control unit (1) controlled by at least three push-buttons (10A, 10B, 10C) with which the operator may easily select one of the three determined spreading positions: full field, intermediate or strict border.

3. The machine according to claim 2, **characterized by** the fact that at least one of the three positions of the flow diverter member (4) corresponding to full field, intermediate, and/or strict border spreading, is adjustable, for example by parameterization of the electronic control unit (1).

4. The machine according to any of claims 1 to 3, **characterized by** the fact that said flow diverter (4) may occupy several intermediate positions, allowing border operation with several spreading spectra of different widths, with a less significant width reduction than for strict border spreading.

5. The machine according to any of claims 1 to 4, **characterized by** the fact that said control unit (2) is remote-controlled from an electronic control unit (1) which is connected to a display device with which the operator may receive certain pieces of information such as notably the speed of the disc, the spreading flow rate, the height or the tilt of the disc relatively to the ground and/or the applied spreading mode: full field, intermediate or strict border.

6. The machine according to any of claims 1 to 5, **characterized by** the fact that said control device (2) is an actuator, notably an electrical actuator provided with a pulse encoder.

7. The machine according to any of the preceding claims, **characterized by** the fact that it is intended to be hitched up to a farm tractor, and that the displacement of the flow diverter member may be remote-controlled from the cabin of the tractor.

8. A machine for centrifugal spreading of fertilizers or of similar granular products according to any of the preceding claims, **characterized by** the fact that it is equipped with a pair of rotary discs with each of which a mobile flow diverter member (4) is associated, with which it is possible to proceed, on each side of the machine, with full field, strict border or intermediate spreading.

## Patentansprüche

1. Maschine zum Fliehkraftstreuen von Dünger oder ähnlichen körnigen Produkten, welche einen Speicherbehälter der Produkte, wenigstens eine rotierende Scheibe (3) mit vertikaler Achse (300), die mit wenigstens einem Auswurfschaufelblatt (30) versehen ist, sowie Mittel zum Entleeren dieser Produkte aus dem Speicherbehälter auf die Scheibe (3) aufweist, wobei die Rotation der Scheibe die Wirkung hat, die Produkte nach Außen von der Scheibe zu schleudern und auf den Boden zu streuen, wobei diese Maschine außerdem mit einer mobilen Einheit (4), die als "Flussausrichter" bezeichnet wird, ausgestattet ist, die dafür geeignet ist, eine Änderung der Flugbahn der Produkte sicherzustellen und die selektiv in die eine oder andere zweier verschiedener und bestimmter Einstellungen mittels einer ferngesteuerten Steuerungsvorrichtung (2) verschoben werden kann, derart, dass in einer dieser beiden Einstellungen der Flussausrichtereinheit, die als "Streuen mitten im Feld" bezeichnet wird, die Breite des Streuspektrums ausgedehnt ist, wohingegen im Gegensatz dazu in ihrer anderen Einstellung, die als "exaktes Randstreuen" bezeichnet wird, die Breite des Streuspektrums auf einer Seite der Maschine deutlich verringert ist, wobei bei der Maschine die Flussausrichtereinheit dafür eingerichtet ist, wenigstens eine dritte bestimmte vordefinierte Einstellung einzunehmen, die als "intermediär" bezeichnet wird und die einer geringeren Verkleinerung der Breite des Streuspektrums als beim exakten Randstreuen entspricht, wobei sie im Körnerfluss vor der Scheibe (3) derart angeordnet ist, dass sie das Entleeren der Produkte auf diese sicherstellt, wobei ihre Verschiebung es gestattet, die Auftreffzone der Produkte auf die Scheibe (3) zu verändern, **dadurch gekennzeichnet, dass** einesteils die Scheibe (3) wenigstens ein Auswurfschaufelblatt (30) trägt, das als Hauptschaufelblatt bezeichnet wird und dem wenigstens ein Nebenschaufelblatt (31) zugeordnet ist, das kürzer ist als das Hauptschaufelblatt und das unmittelbar vor letzterem angeordnet ist, wenn man die Rotationsrichtung (R) der Scheibe (3) berücksichtigt, und dass andernteils die drei bestimmten Einstellungen der Flussausrichtereinheit (4) so definiert sind, dass:
a) in der Einstellung für Streuen mitten im Feld die Auftreffzone (ZA) der Produkte auf die Scheibe (3) vor der Bahn des Hauptschaufelblatts (30) angeordnet ist, unmittelbar hinter der Bahn des Nebenschaufelblatts (31), und dies derart, dass die Produkte von letzterem nicht eingefangen werden, sondern nur vom Hauptschaufelblatt (30);
b) in der Einstellung für exaktes Randstreuen die Auftreffzone (ZC) der Produkte auf die Scheibe (3) derart vor der Bahn des Nebenschaufelblatts (31) angeordnet ist, dass die Produkte von letzterem eingefangen werden, jedoch nicht vom Hauptschaufelblatt (30);
c) in der intermediären Einstellung die Auftreffzone (ZB) der Produkte auf die Scheibe (3) sich derart auf beiden Seiten der Bahn des Nebenschaufelblatts (31) befindet, dass die Produkte teilweise von letzterem und teilweise vom Hauptschaufelblatt (30) eingefangen werden.

2. Maschine nach Anspruch 1, **dadurch gekennzeichnet, dass** die Steuerungsvorrichtung (2) von einer über mindestens drei Druckknöpfe (10A, 10B, 10C) ansteuerbaren elektronischen Kontrolleinheit (1) ferngesteuert wird, was es dem Bediener gestattet, eine der drei bestimmten Streueinstellungen leicht auszuwählen: mitten im Feld, intermediär oder mit exaktem Rand.

3. Maschine nach Anspruch 2, **dadurch gekennzeichnet, dass** wenigstens eine der drei Einstellungen der Flussausrichtereinheit (4), die dem Streuen mitten im Feld, dem intermediären Streuen und/oder dem exakten Randstreuen entsprechen, einstellbar ist, beispielsweise durch die Konfiguration der elektronischen Kontrolleinheit (1).

4. Maschine nach einem der Ansprüche 1 bis 3, **dadurch gekennzeichnet, dass** der Flussausrichter (4) mehrere intermediäre Einstellungen einnehmen kann, welche es gestatten, am Rand mit mehreren Streuspektren mit unterschiedlichen Breiten zu arbeiten, wobei diese eine geringere Verkleinerung der Breite als beim exakten Randstreuen aufweisen.

5. Maschine nach einem der Ansprüche 1 bis 4, **dadurch gekennzeichnet, dass** die Steuerungsvorrichtung (2) von einer elektronischen Kontrolleinheit (1) ferngesteuert wird, welche mit einer Anzeigevorrichtung verbunden ist, die es dem Bediener ermöglicht, bestimmte Informationen zu erhalten, wie insbesondere die Geschwindigkeit der Scheibe, den Streuausfluss, die Höhe oder die Neigung der Scheibe relativ zum Boden und/oder den ausgeführten Streumodus: mitten im Feld, intermediär oder mit exaktem Rand.

6. Maschine nach einem der Ansprüche 1 bis 5, **dadurch gekennzeichnet, dass** die Steuerungsvorrichtung (2) ein Zylinder ist, insbesondere ein mit einem Impulsgeber ausgestatteter elektrischer Zylinder.

7. Maschine nach einem der vorhergehenden Ansprüche, **dadurch gekennzeichnet, dass** sie dafür vorgesehen ist, an einen landwirtschaftlichen Traktor angekuppelt zu werden, und dass die Bewegung der Flussausrichtereinheit aus dem Führerhaus des Traktors ferngesteuert werden kann.

8. Maschine zum Fliehkraftstreuen von Dünger oder ähnlichen körnigen Produkten nach einem der vorhergehenden Ansprüche, **dadurch gekennzeichnet, dass** sie mit einem Paar rotierender Scheiben ausgestattet ist, wobei jeder von ihnen eine mobile Flussausrichtereinheit (4) zugeordnet ist, was es gestattet, auf jeder Seite der Maschine ein Streuen mitten im Feld, mit exaktem Rand oder ein intermediäres Streuen auszuführen.
